(19) Europäisches Patentamt
European Patent Office
Office européen des brevets

(11) Veröffentlichungsnummer: **0 023 889**
**B1**

(12) # EUROPÄISCHE PATENTSCHRIFT

(45) Veröffentlichungstag der Patentschrift: **09.03.83**

(21) Anmeldenummer: **80810235.4**

(22) Anmeldetag: **28.07.80**

(51) Int. Cl.³: **C 09 B 57/04**, C 07 D403/12, C 07 D413/12, C 07 D417/12, C 08 J 3/20

(54) **Imino-isoindolinon-Metallkomplexe, Verfahren zu deren Herstellung, Verfahren zum Pigmentieren von hochmolekularem organischem Material und hochmolekulares organisches, einen solchen Metallkomplex enthaltendes Material.**

(30) Priorität: **03.08.79 CH 7154/79**

(43) Veröffentlichungstag der Anmeldung: **11.02.81 Patentblatt 81/06**

(45) Bekanntmachung des Hinweises auf die Patenterteilung: **09.03.83 Patentblatt 83/10**

(84) Benannte Vertragsstaaten: **CH DE FR GB IT LI**

(56) Entgegenhaltungen:
**CH A 580 678**
**GB A 1 512 554**

(73) Patentinhaber: **CIBA-GEIGY AG**
**Patentabteilung Postfach**
**CH-4002 Basel (CH)**

(72) Erfinder: **Frey, Christoph, Dr.**
**Schürhofweg 8**
**CH-4147 Aesch (CH)**

**EP 0 023 889 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imino-isoindolinon-Metallkomplexe, Verfahren zu deren Herstellung, Verfahren zum Pigmentieren von hochmolekularem organischen Material und hochmolekulares organisches, einen solchen Metallkomplex enthaltendes Material.

Die Erfindung betrifft Iminoisoindolinon-Metallkomplexe der Formel

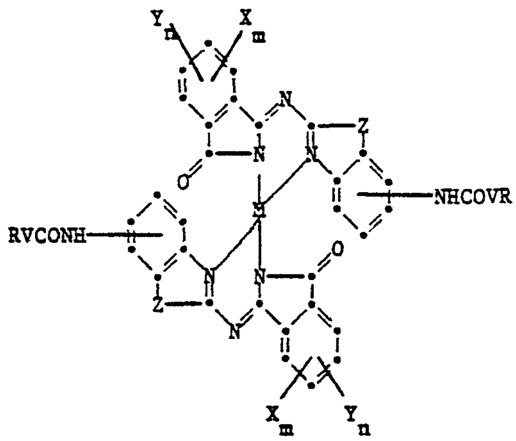

(I)

worin R ein H-Atom, eine Alkylgruppe, einen Arylrest, oder einen heterocyclischen Rest, V eine direkte Bindung oder eine -NH-Gruppe, X ein H-Atom, Y ein Halogenatom, Z ein O- oder S-Atom oder eine -NH-Gruppe, M ein zweiwertiges Nicht-Erdalkalimetall, m und n 0-4 bedeuten, wobei die Summe von m und n 4 sein muss.

Sofern R für eine Alkylgruppe steht, bedeutet sie vorzugsweise eine Alkylgruppe mit 1-6 C-Atomen. Die Alkylgruppen können sowohl gradlinig als auch verzweigt sein und durch Halogenatome, beispielsweise Chloratome, oder Alkoxygruppen mit 1-4 C-Atomen oder Phenylgruppen substituiert sein. Bedeutet R einen heterocyclischen Rest, dann vorzusgweise einen 5- oder 6-gliedrigen mit O, S und oder N als Heteroatomen, wie z. B. einen 2-Furyl-, 2-Thienyl-, 2-Oxazolyl-, 2-Thiazolyl-, 2-Imidazolyl- oder 3-Pyridylrest. V steht vorzugsweise für eine direkte Bindung, Y vorzugsweise für ein Chloratom und Z vorteilhaft für die -NH-Gruppe. Als Metalle M sind Nickel, Kobalt und Kupfer bevorzugt.

Von besonderem Interesse sind Metallkomplexe der Formel

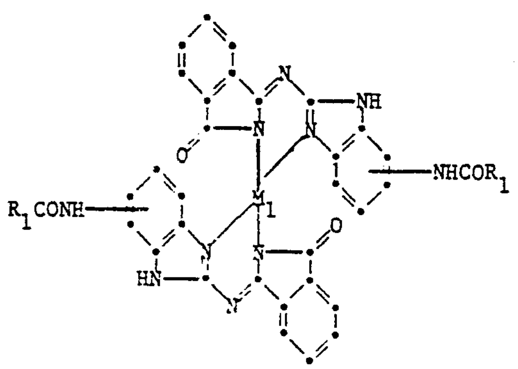

(II)

worin $R_1$ eine Alkylgruppe mit 1-4 C-Atomen, eine gegebenenfalls durch Halogenatome, Methylgruppen, Alkoxygruppen mit 1-4 C-Atomen oder durch eine weitere Phenylgruppe substituierte Phenylgruppe oder einen Naphthylrest und $M_1$ Nickel, Kobalt oder Kupfer bedeutet.

Zu den erfindungsgemässen Metallkomplexen gelangt man. wenn man ein Iminoisoindolidon der Formel

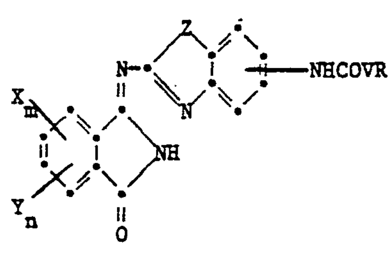

(III)

worin R, V, X, Y, Z, m und n die angegebenen Bedeutungen haben, mit Mitteln behandelt, die ein zweiwertiges Nicht-Erdalkalimetall, vorzugsweise Nickel, Kupfer und insbesondere Kobalt abgeben.

Von besonderem Interesse, als Ausgangsstoffe sind jene Iminoisoindolinone der Formel (III) worin Z die NH-Gruppe, m = 4 und n = 0 bedeutet.

Die Iminoisoindoline der Formel (III) erhält man nach bekanntem Verfahren durch Kondensation eines Isoindolinons der Formel

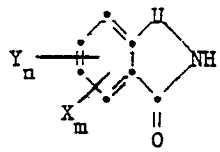

(IV)

worin X, Y, m und n die angegebene Bedeutung haben und U eine Gruppe der Formel

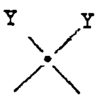

oder

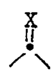

bedeutet, worin X für eine Imino- oder Thiogruppe und Y für ein Halogenatom, eine Alkoxygruppe mit 1-4 C-Atomen oder eine sekundäre Aminogruppe stehen, mit einem Amin der Formel

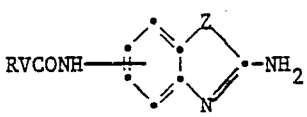

(V)

worin R, V und Z die angegebene Bedeutung haben.

Die Amine der Formel (V) erhält man durch Monoacylierung von 2-Nitro-1,4-phenylendiamin mit dem entsprechenden Carbonsäurechlorid zum 1-Amino-2-nitro-4-acylamino-benzol, katalytische Hydrierung des letzteren zum 1,2-Diamino-4-acylaminobenzol und Umsetzung des letzteren mit Bromcyan.

Als Beispiele von Isoindolinonen der Formel (IV) seien erwähnt :

5,6-Dichlor-3-imino-isoindolinon, 4,5,6,7-Tetrachlor-3-imino-isoindolinon, 3,3-Dimethoxy-5-chlor-isoindolinon, 3,3-Dimethoxy-6-jod-isoindolinon, 3,3-Dimethoxy-7-chlor-isoindolinon, 3,3-Dimethoxy-7-fluor-isoindolinon, 3,3-Dimethoxy-4,5-dichlor-isoindolinon, 3,3-Dimethoxy-4,6-dichlor-isoindolinon, 3,3-Dimethoxy-4,5,6,7-tetrachlor-isoindolinon und insbesondere das 3-Iminoisoindolinon.

Bei den erwähnten Isoindolinonen handelt es sich um bekannte Verbindungen.

Als Beispiele von Aminen der Formel (V) seien erwähnt :

2-Amino-5- oder -6-acetylamino-benzoxazol, 2-Amino-5- oder -6-propionylamino-benzoxazol, 2-Amino-5- oder -6-benzoylamino-benzoxazol, 2-Amino-5- oder -6-acetylamino-benzthiazol, 2-Amino-5- oder -6-propionylamino-benzthiazol, 2-Amino-5- oder -6-benzoylamino-benzthiazol, 2-Amino-5- oder -6-formylamino-benzimidazol, 2-Amino-5- oder -6-acetylamino-benzimidazol, 2-Amino-5- oder -6-propionylamino-benzimidazol, 2-Amino-5- oder -6-butyrylamino-benzimidazol, 2-Amino-5- oder -6-chloracetylamino-benzimidazol, 2-Amino-6-methoxyacetylamino-benzimidazol, 2-Amino-5-phenacetylamino-benzimidazol, 2-Amino-5-benzoylamino-benzimidazol, 2-Amino-5-o-, m- oder p-chlorbenzoylamino-benzimidazol, 2-Amino-5-(2',5'-dichlorbenzoylamino)-benzimidazol, 2-Amino-5-(2',4'-dichlorbenzoylamino)-benzimidazol, 2-Amino-5-o-, m- oder p-methoxybenzoylamino-benzimidazol, 2-Amino-5-p-diphenylylcarbonylamino-benzimidazol, 2-Amino-5-α-naphtoylamino-benzimidazol, 2-Amino-5- oder -6-2'-furoylamino-benzimidazol, 2-Amino-5- oder -6-2'-thienoylamino-benzimidazol, 2-Amino-5- oder -6-3'-pyridincarbonylamino-benzimidazol.

Die Amine der Formel (III) kann man auch dadurch erhalten, dass man ein Nitroamin der Formel

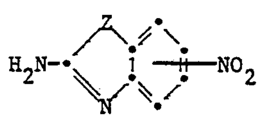

mit einem Isoindolinon der Formel (IV) kondensiert, die erhaltene Nitroverbindung zum Amin der Formel

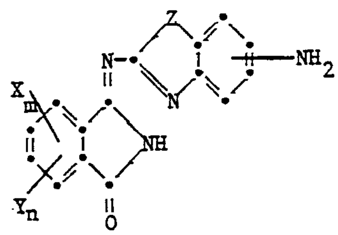

(VII)

reduziert und letzteres mit Mitteln behandelt, die den Acylrest -COVR abgeben. Dieses Verfahren ist besonders vorteilhaft, wenn VR einen Alkylrest mit 1-6 C-Atomen bedeutet.

Die Kondensation der Isoindolinone mit den Aminen der Formel (V) erfolgt teilweise schon in der Kälte, gegebenenfalls unter Erwärmen der innig vermischten Komponenten, besonders vorteilhaft in Gegenwart inerter, d. h. nicht an der Reaktion teilnehmender organischer Lösungsmittel.

Geht man von 3-Imino-, 3-Thio- oder 3,3-Bis-tert.-amino-isoindolin-1-onen oder von Alkalisalzen der 3,3-Dialkoxyisoindolin-1-one aus, so verwendet man vorteilhaft mit Wasser mischbare organische Lösungsmittel, z. B. niedere aliphatische Alkohole, wie niedere Alkanole, beispielsweise Methanol, Isopropanol oder Butanol, niedere cyclische Aether, wie Dioxan, Aethylenglykolmonomethyläther. Die Kondensation erfolgt hierbei schon bei verhältnismässig tiefen Temperaturen. Vorteilhaft arbeitet man in Gegenwart basenbindender Mittel ; als solche sind beispielsweise niedere Fettsäuren, die dann gleichzeitig als Lösungsmittel dienen, insbesondere Essigsäure, zu erwähnen.

Da die erhaltenen Kondensationsprodukte in den erwähnten Lösungsmitteln schwer löslich sind, lassen sie sich leicht durch Filtration isolieren. Allfällige Verunreinigungen können durch Auswaschen entfernt werden.

Zur Ueberführung in die Metallkomplexe werden die erhaltenen Isoindolinone mit Mitteln behandelt, welche Nichterdalkalimetalle, wie Zink oder Cadmium, insbesondere aber Nickel, Kupfer und Kobalt, abgeben. Man verwendet vorzugsweise die Formiate, Acetate oder Stearate dieser Metalle, beispielsweise Nickel-(II)-acetat, Kupfer-(II)-acetat, Kobalt-(II)-acetat, oder Kobalt-(II)-acetylacetonat. Die Metallisierung findet zweckmässig in einem oder in einem Gemisch der oben genannten Lösungsmittel oder insbesondere in Dimethylformamid, Aethylenglykol-monoalkyläther oder Diäthylenglykol-monoalkyläther statt.

Es ist auch möglich, Kondensation und Metallisierung im Eintopfverfahren durchzuführen. Anstelle einheitlicher Salze kann man auch Mischungen von solchen verschiedener Metalle verwenden, man erhält dann gemischt metallisierte Komplexe.

Technisch besonders interessiert wegen günstiger Kombination von hohen Migrations- und Licht- bzw. Wetterechtheiten sind die Imidazolderivate.

Die neuen Farbstoffe stellen wertvolle Pigmente dar, welche in feinverteilter Form zum Pigmentieren von hochmolekularem organischem Material verwendet werden können z. B. Celluloseäthern und -estern, wie Aethylcellulose, Nitrocellulose, Celluloseacetat, Cellulosebutyrat, natürlichen Harzen oder Kunstharzen, wie Polymerisationsharzen oder Kondensationsharzen, z. B. Aminoplasten, insbesondere Harnstoff- und Melamin-Formaldehydharzen, Alkydharzen, Phenoplasten, Polycarbonaten, Polyolefinen wie Polyäthylen, Polypropylen oder Polyisobutylen, ferner Polystyrol, Polyvinylchlorid, Polyacrylnitril, Polyacrylsäureester, Polyamiden, Polyurethanen oder Polyestern, Gummi, Casein, Silikon und Silikonharzen, einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die erhaltenen Färbungen zeichnen sich durch farbstarke Gelbtöne von guter Licht-, Migrations-, Wetter- und Hitzeechtheit aus.

Gegenüber den in der GB-A-1 512 554 beschriebenen Metallkomplexen zeichnen sich die erfindungsgemässen durch eine wesentlich höhere Farbstärke aus, und ferner dadurch, dass sie in einer Form anfallen, die eine Konditionierung erübrigt.

In den nachfolgenden Beispielen bedeuten die Prozente Gewichtsprozente, und die Temperaturen sind in Celsiusgraden angegeben.

## Beispiel 1

12,5 g 2-Amino-5-benzoylamino-benzimidazol und 9,1 g Phthalimidin-hydrochlorid werden in 120 g Aethylenglycolmonoäthyläther während 3 Stunden unter Rühren auf Rückfluss gehalten. Dann filtriert man das ausgefallene Produkt bei Raumtemperatur, wäscht es mit Methanol und Wasser nach und trocknet es im Vakuum bei 90-100 °C. Es ist ein gelbes Kristallpulver der Formel

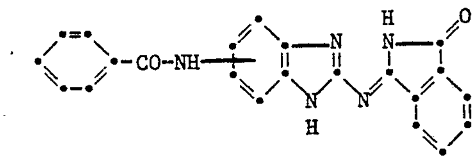

5,0 g dieses Produktes werden in 100 g Diäthylenglycol-monoäthyläther mit 1,8 g Nickelacetat · $4H_2O$ während 15 Stunden bei 145-150° unter Rühren erhitzt. Das gebildete Pigment wird bei 100° abgenutscht und mit kaltem Methanol, Aceton und Wasser gewaschen. Man erhält nach dem Trocknen ein gelbes Kristallpulver, das z. B. durch Mahlen in Isopropanol mit Hilfe von Mahlkörpern in feine Verteilung gebracht werden kann. In Polyvinylchloridfolie eingewalzt, oder zur Pigmentierung von Lacken eingesetzt, liefert es gelbe Färbungen, die sich durch hohe Farbstärke, gute Licht- und Wetterechtheiten auszeichnen.

Beispiele 2-24

In der nachfolgenden Tabelle 1 sind Pigmente aufgeführt, die nach der in Beispiel 1 beschriebenen Methode unter den gleichen Reaktionsbedingungen erhältlich sind. Es sind Pigmente der allgemeinen Formel (II), wobei die Bedeutung von $R_1$ in Kolonne 2 und die der Metallatome (M) in Kolonne 3 und die Farbe der damit pigmentierten Lacke in Kolonne 4 angegeben sind.

Tabelle 1

| Nr. | R | Metallatom | Farbton im Lack |
|---|---|---|---|
| 2 | Phenyl | Co | rotstichig gelb |
| 3 | Methyl | Ni | rotstichig gelb |
| 4 | Methyl | Co | rotstichig gelb |
| 5 | 2,5-Dichlorphenyl | Co | gelb |
| 6 | 2,5-Dichlorphenyl | Cu | grünstichig gelb |
| 7 | 2,4-Dichlorphenyl | Co | rotstichig gelb |
| 8 | 2,4-Dichlorphenyl | Ni | gelb |
| 9 | 2,4-Dichlorphenyl | Cu | grünstichig gelb |
| 10 | 3,4-Dichlorphenyl | Ni | gelb |
| 11 | 3,4-Dichlorphenyl | Co | rotstichig gelb |
| 12 | α-Naphthyl | Co | gelb |
| 13 | 4-Diphenylyl | Ni | gelb |
| 14 | 4-Diphenylyl | Co | rotstichig gelb |
| 15 | 2,6-Dichlorphenyl | Co | gelb |
| 16 | 4-Chlorphenyl | Co | rotstichig gelb |
| 17 | 4-Chlorphenyl | Ni | gelb |
| 18 | 4-Chlorphenyl | Cu | grünstichig gelb |
| 19 | 2-Methylphenyl | Ni | grünstichig gelb |
| 20 | 2-Methylphenyl | Co | gelb |
| 21 | 3-Methylphenyl | Ni | gelb |
| 22 | 3-Methylphenyl | Co | rotstichig gelb |
| 23 | 4-Methylphenyl | Co | rotstichig gelb |
| 24 | 4-Methylphenyl | Ni | gelb |

Beispiel 25

47 g der durch Kondensation von 2-Amino-5-nitrobenzimidazol mit Iminophthalimid-hydrochlorid erhaltenen Nitroverbindung der Formel

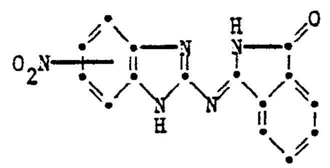

werden in 500 ml Dimethylformamid unter Zusatz von 15 g Raney Nickel bei 70-75° hydriert. Die Wasserstoffaufnahme beträgt 10,1 1 = 99% d. Th. Der Katalysator wird abfiltriert, und die klare Lösung langsam unter Rühren mit 2 000 ml Wasser versetzt, wobei das entsprechende Amin in Form von orangen Kristallen ausfällt.

10 g dieses Amins werden in 100 ml o-Dichlorbenzol unter Rühren auf 110° erwärmt, dann werden 4,05 g Essigsäureanhydrid zugetropft und noch 1 Stunden bei 115-120° nachgerührt. Nach dem Abkühlen auf Raumtemperatur wird filtriert und mit Methanol und Wasse gewaschen. Das so erhaltene Produkt wird gemäss Beispiel 1 mit Nickelacetat · $4H_2O$ metallisiert. Das erhaltene Pigment ist identisch mit dem gemäss Beispiel 3 erhaltenen.

Obiger Nitrokörper kann auch auf folgende Art erhalten werden : 12,1 g Phthalodinitril werden in 120 ml Isopropanol, 60 ml o-Dichlorbenzol und 9,9 g Natronlauge à 50% 2 Stunden bei 30-35° gerührt. Anschliessend gibt man 3,1 ml Schwefelsäure à 96% zu, lässt 30 Minuten nachrühren, dann destilliert man im Vakuum unter langsamer Erwärmung bis max. 65° Wasser und Isopropanol ab. Nun gibt man 16,1 g 2-Amino-5-nitrobenzimidazol, erwärmt auf 130-135° und rührt 2 Stunden bei dieser Temperatur. Nach dem Abkühlen wird filtriert und mit Methanol und heissem Wasser ausgewaschen. Man erhält 19,1 des gelben, kristallinen Nitrokörpers, der gegebenenfalls noch z. B. aus Dimethylformamid umkristallisiert werden kann.

## Beispiel 26

Man arbeitet wie in Beispiel 25, verwendet jedoch als Metall abgebendes Mittel Kobaltacetat · $4H_2O$. Das erhaltene Pigment ist identisch mit dem gemäss Beispiel 4 erhaltenen.

## Beispiel 27

Verwendet man anstelle des in Beispiel 25 verwendeten Essigsäure-anhydrides eine äquivalente Menge Propionsäureanhydrid und verfährt sonst gleich, so erhält man nach der Metallisierung Pigmente, die denen von Beispiel 25 sehr ähnlich sind.

## Beispiel 28

23,2 g des gemäss Beispiel 25, Absatz 1 erhaltenen Amins werden in 250 ml o-Dichlorbenzol und 6, 75 ml Pyridin unter Rühren auf 110° erwärmt. Dann lässt man langsam 16,2 g 4-Chlorbenzoylchlorid eintropfen, und hält nach 1 Stunde bei 115-120°. Nach dem Abkühlen auf Raumtemperatur filtriert man und wäscht den Niederschlag mit Methanol und Wasser gut aus und trocknet ihn im Vakuum bei ca 100°. Nach der Metallisierung mit Kobalt-, Nickel- oder Kupferacetat erhält man Pigmente, die mit den gemäss Beispielen 16, 17 resp. 18 erhaltenen identisch sind.

## Beispiele 29-33

Ersetzt man in Beispiel 28 das 4-Chlorbenzoylchlorid durch äquivalente Mengen der in folgender Tabelle aufgeführten Säurechloride und verfährt man sonst gleich, so erhält man ähnliche Pigmente.

Tabelle 2

| No. | Säurechlorid | Metall | Nuance |
|---|---|---|---|
| 29 | Diphenyl-4-carbonsäure-chlorid | Co | rotstichig gelb (identisch mit Bsp. 14) |
| 30 | Isobuturylchlorid | Ni | gelb |
| 31 | Isobuturylchlorid | Co | rotstichig gelb |
| 32 | Isobuturylchlorid | Cu | grünstichig gelb |
| 33 | Chloracetylchlorid | Co | rotstichig gelb |

Tabelle 2 (Fortsetzung)

| No. | Säurechlorid | Metall | Nuance |
|---|---|---|---|
| 34 | 4-Methoxy-benzoylchlorid | Ni | gelb |
| 35 | 4-Methoxy-benzoylchlorid | Co | rotstichig gelb |
| 36 | Thiophen-2-carbonsäure-chlorid | Ni | gelb |
| 37 | Thiophen-2-carbonsäure-chlorid | Co | rotstichig gelb |
| 38 | Furan-2-carbonsäure-chlorid | Ni | gelb |
| 39 | Furan-2-carbonsäure-chlorid | Co | rotstichig gelb |
| 40 | Pyridin-3-carbonsäure-chlorid | Ni | gelb |
| 41 | Pyridin-3-carbonsäure-chlorid | Co | rotstichig gelb |

Beispel 42

In eine Lösung von 100 ml Methanol und 2,7 g Natriummethylat werden 15,75 g 3,4,5,6-Tetrachlor-o-cyanbenzoesäuremethylester eingetragen und 1/2 Stunde verrührt. Nun fügt man 12,8 g 2-Amino-5-benzoylamino-benzimidazol hinzu und rührt 15 Stunden bei Raumtemperatur. Anschliessend wird mit 100 ml o-Dichlorbenzol verdünnt und mit 5 ml Essigsäure angesäuert, wobei der freie orange Farbstoff entsteht. Unter Rühren wird die Temperatur, während Methanol abdestilliert, auf 150° erhöht. Nach 2 Stunden lässt man abkühlen, filtriert den Farbstoff ab, wäscht mit o-Dichlorbenzol, Methanol und Wasser. Man erhält nach dem Trocknen den Farbstoff der Formel

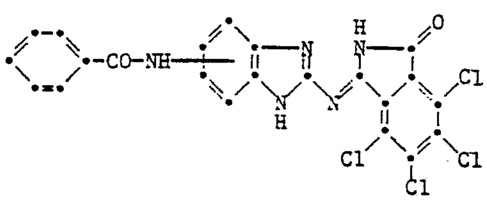

5,19 g des obigen Tetrachlorisoindolinon-Farbstoffes werden in Diäthylenglycol-monoäthyläther unter Zusatz von 1,1 g Cu-acetat · $4H_2O$ während 15 Stunden auf 145-150° erhitzt. Das gebildete Pigment wird bei 100° abgenutscht und mit kaltem Methanol, Aceton und Wasser gewaschen. Man erhält nach dem Trocknen 5,1 g eines Pigmentpulvers. Werden Lacke mit diesem Cu-Komplex pigmentiert, so lassen sich gelbe Lackierungen herstellen, die gute Wetterechtheit besitzen.

Beispiele 43-50

In der nachfolgenden Tabelle sind Pigmente beschrieben, die nach der in Beispiel 42 beschriebenen Herstellungsmethode unter den gleichen Reaktionsbedingungen entstehen. Als Aroylaminogruppen enthalten sie die in Kolonne II aufgeführten Reste und die die in Kolonne III erwähnten Metalle.

(Siehe die Tabelle 3, Seite 8)

Tabelle 3

| Nr. | Aroylaminogruppe | M | Nuance |
|---|---|---|---|
| 43 | Benzoylamino | Ni | gelb |
| 44 | Benzoylamino | Co | rotstichig gelb |
| 45 | p-Chlorbenzoylamino | Cu | rotstichig gelb |
| 46 | p-Chlorbenzoylamino | Co | rotstichig gelb |
| 47 | p-Chlorbenzoylamino | Ni | gelb |
| 48 | Diphenyl-4-carbonylamino | Cu | rotstichig gelb |
| 49 | Diphenyl-4-carbonylamino | Ni | rotstichig gelb |
| 50 | Diphenyl-4-carbonylamino | Co | gelb |

Beispiel 51

In der nachfolgenden Tabelle 4 sind Pigmente aufgeführt, die nach der in Beispiel 42 beschriebenen Herstellungsmethode unter den gleichen Reaktionsbedingungen erhalten wurden. In Kolonne II sind die an Stelle des 3,4,5,6-Tetrachlor-2-cyanbenzoesäuremethylesters verwendeten 2-Cyanbenzoesäuremethylester angegeben, in Kolonne III die Aroylaminogruppen des 2-Amino-benzimidazolrestes und in Kolonne IV die verwendeten Metalle. Kolonne V gibt die Farbe der damit pigmentierten Lacke an.

Tabelle 4

| No. | -2-cyanbenzoesäure-methylester | Aroylaminogruppe | Metall | Nuance |
|---|---|---|---|---|
| 51 | 3,4,5,6-Tetrabrom- | 4-Chlorbenzoylamino | Ni | rotstichig gelb |
| 52 | 3,4,5,6-Tetrabrom- | 4-Chlorbenzoylamino | Co | " |
| 53 | 3,4,6-Trichlor-5-methoxy- | 4-Chlorbenzoylamino | Ni | " |
| 54 | 3,4,6-Trichlor-5-methoxy- | 4-Chlorbenzoylamino | Co | " |
| 55 | 3,4,6-Trichlor-5-(4'-chlorphenoxy)- | 4-Chlorbenzoylamino | Ni | " |
| 56 | 3,4,6-Trichlor-5-(4'-chlorphenoxy)- | 4-Chlorbenzoylamino | Co | " |
| 57 | 4,5-Dichlor- | Diphenyl-4-carbonylamino | Ni | gelb |
| 58 | 4,5-Dichlor- | Diphenyl-4-carbonylamino | Co | " |

Beispiel 59

6,38 g des Farbstoffes der Formel

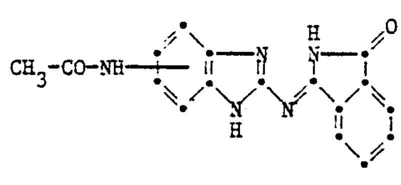

werden in 100 ml Diäthylenglycol-monoäthyläther zusammen mit 1,095 g Zn-acetat · $2H_2O$ und 1,245 g

Co-acetat · $4H_2O$ 15 Stunden unter Rühren auf 145-150° erwärmt. Nach dem Abkühlen auf 100° wird filtriert und mit Methanol, Aceton und Wasser gewaschen, dann im Vakuum bei 100° getrocknet. Man erhält ein Pigment, das in PVC oder Lacken ausgefärbt eine wesentlich grünere Nuance zeigt als der reine Co-Komplex, aber doch noch gute Echtheiten besitzt. (Das Pigment enthält 4,04% Co und 4,54% Zn, berechnet : 4,22% Co und 4,68% Zn).

Beispiel 60

13,85 g des gemäss Beispiel 25, Absatz 1 erhaltenen Amins werden in 150 ml o-Dichlorbenzol auf 110° erwärmt. Dann lässt man 6,13 g Phenylisocyanat zutropfen und hält noch 3 Stunden unter Rühren auf 145-150°. Nach dem Abkühlen auf Raumtemperatur filtiert man, wäscht mit wenig Methanol und heissem Wasser aus. Nach dem Trocknen erhält man 15 g eines Produktes der Formel

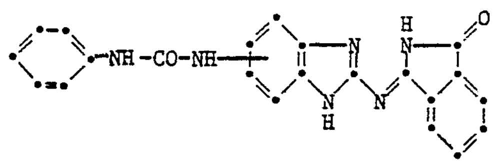

4,0 g dieses Produktes werden in 100 ml Diäthylenglycolmonoäthyläther mit 1,38 g Kobaltacetat 4 · $H_2O$ 15 Stunden unter Rühren auf 145-150 °C gehalten ; dann wird bei 60° filtriert und mit Methanol, Aceton und Wasser nachgewaschen. Man erhält ein braunes Pulver, das in feine Verteilung gebracht und in die Polyvinylchloridfolie eingewalzt eine braune Färbung liefert.

Beispiel 61

Ersetzt man in Beispiel 60 das Phenylisocyanat durch 3,4-Dichlorphenylisocyanat so erhält man bei sonst gleichem Verfahren das entsprechende 3,4-Dichlorphenyl-harnstoffderivat, dessen Nickelkomplex, hergestellt nach dem Verfahren von Beispiel 60 Absatz 2, gelbbraune Färbungen in Polyvinylchlorid oder in Lacken liefert.

Beispiel 62

Verfährt man wie in Beispiel 61, stellt jedoch den Kobaltkomplex her, so erhält man in PVC oder Lacken ebenfalls gelbbraune Färbungen.

Beispiel 63

58,3 g der durch Kondensation von 6-Nitro-2-aminobenzthiazol mit Iminophthalimino-hydrochlorid erhaltenen Nitroverbindung der Formel

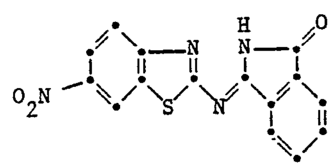

werden in 600 ml Dimethylformamid unter Zusatz von 12 g Palladiumkohle bei 20-25° hydriert. Die Wasserstoffaufnahme beträgt 11,91 1 = 99% d. Th. Nach Zusatz von 1 000 ml Dimethylformamid wird das ausgefallene Amin bei 100° in Lösung gebracht und vom Katalysator abfiltriert. Durch langsames Zugeben von 3 000 ml Wasser wird das Amin ausgefällt, dann filtriert, gewaschen mit Methanol und Wasser und getrocknet. Das erhaltene Amin wird nach dem Verfahren von Beispiel 25, Absatz 2 bzw. Beispiel 28 mit dem in Tabelle 5, Kolonne II angegebenen Acylierungsmittel umgesetzt und mit dem in Kolonne III aufgeführten Metall metallisiert.

Kolonne IV zeigt die Farbe der damit pigmentierten Lacke.

Siehe die Tabelle, Seite 10

Tabelle 5

| No. | Acylierungsmittel | Metall | Nuance |
|---|---|---|---|
| 64 | Acetanhydrid | Co | rotstichig gelb |
| 65 | " | Ni | " " |
| 66 | " | Cu | gelb |
| 67 | Benzoylchlorid | Co | rotstichig gelb |
| 68 | " | Ni | " |
| 69 | " | Cu | gelb |
| 70 | p-Phenyl-benzoylchlorid | Co | rotstichig gelb |
| 71 | " | Ni | " " |
| 72 | " | Cu | gelb |
| 73 | p-Chlorbenzoylchlorid | Co | gelbbraun |
| 74 | " | Ni | " |
| 75 | " | Cu | " |

Beispiel 76

93 g des durch Kondensation von 5-Nitro-2-aminobenzoxazols mit Iminophthalimid-hydrochlorid erhaltenen Nitroverbindung der Formel

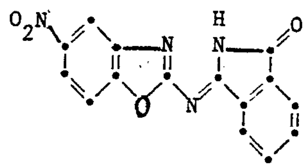

werden in 1 800 ml Dimethylformamid unter Zusatz von 18 g Raney-Nickel bei Raumtemperatur hydriert. Die Wasserstoffaufnahme betrug 20,6 1 = 102% d. Th. Die Suspension wurde mit 1 000 ml Dimethylformamid verdünnt, auf 100° aufgewärmt, gelöst und vom Katalysator abgetrennt. Die klare Lösung wurde dann mit ca. 2 000 ml Wasser versetzt um das entsprechende Amin auszuscheiden, das dann filtriert und mit Methanol und Wasser ausgewaschen und im Vakuum bei 70° getrocknet wurde.
Dieses Amin wird nach dem Verfahren von Beispiel 25 Absatz 2 bzw. Beispiel 28 mit dem in Kolonne der Tabelle 6 angegebenen Acylierungsmittel umgesetzt, dann nach dem Verfahren des Beispiel 1 mit dem in Kolonne III angegebenen Metall metallisiert.

Die folgende Tabelle führt einige so erhaltene Pigmente an, wobei Kolonne II das Acylierungsmittel, Kolonne III das Metall und Kolonne IV den Farbton der damit pigmentierten Lacke angibt.

Tabelle 6

| No. | Acylierungsmittel | Metall | Nuance |
|---|---|---|---|
| 76 | Acetanhydrid | Ni | grünstichig gelb |
| 77 | " | Co | rotstichig gelb |
| 78 | Benzoylchlorid | Co | gelb |
| 79 | " | Ni | grünstichig gelb |
| 80 | p-Chlorbenzoylchlorid | Co | gelb |
| 81 | " | Ni | grünstichig gelb |
| 82 | p-Phenyl-benzoylchlorid | Co | rotstichig gelb |
| 83 | " | Ni | grünstichig gelb |
| 84 | Ameisensäure | Co | gelb |

Beispiel 85

65 Teile stabilisiertes Polyvinylchlorid, 35 Teile Dioctylphthalat und 0,2 Teile des gemäss Beispiel 1 erhaltenen Farbstoffest werden miteinander verrührt und dann auf einem Zweiwalzenkalander während 7 Minuten bei 140° hin- und hergewalzt. Man erhält eine brillant gelb gefärbte Folie von sehr guter Licht- und Migrationsechtheit.

Beispiel 86

10 g Titandioxyd und 2 g des nach Beispiel 1 hergestellten Pigments werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120 °C eingebrannt, dann erhält man eine brillante Gelblackierung, die sich bei guter Farbstärke durch eine sehr gute Ueberlackier-, Licht- und Wetterechtheit auszeichnet.

Beispiel 87

Ein zur Faserherstellung geeignetes Polypropylen-Granulat wird in einem verschliessbaren Gefäss zusammen mit 1% des Farbstoffes gemäss Beispiel 1 auf einer Schüttelmaschine 15 Minuten geschüttelt. Die gleichmässig gefärbten Granulatkörner werden auf einer Schmelzspinnanlage zu Fäden versponnen, die auf einer Streckzwirnanlage verstreckt und aufgespult werden, extrudiert und versponnen. Man erhält Fasern von gelber Färbung mit hervorragenden Eigenschaften.

**Ansprüche**

1. Imino-isoindolinon-Metallkomplexe der Formel

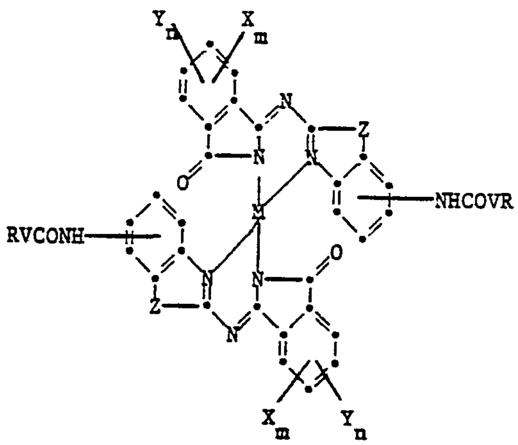

(II)

worin R ein H-Atom, eine Alkylgruppe, einen Arylrest, oder einen heterocyclischen Rest, V eine direkte Bindung oder eine -NH-Gruppe, X ein H-Atom, Y ein Halogenatom, Z ein O- oder S-Atom oder eine -NH-Gruppe, M ein zweiwertiges Nicht-Erdalkalimetall, m und n 0-4 bedeuten, wobei die Summe von m und n 4 sein muss.

2. Metallkomplexe gemäss Anspruch 1, worin M Nickel, Kupfer oder Kobalt bedeutet.

3. Metallkomplexe gemäss Anspruch 1 der Formel

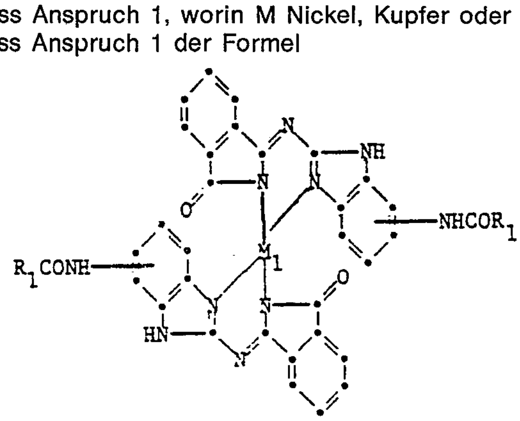

worin $R_1$ eine Alkylgruppe mit 1-4 C-Atomen, eine gegebenenfalls durch Halogenatome, Methylgruppen, Alkoxygruppen mit 1-4 C-Atomen oder durch eine weitere Phenylgruppe substituierte Phenylgruppe oder einen Naphthylrest und $M_1$ Nickel, Kobalt oder Kupfer bedeutet.

4. Metallkomplexe gemäss Anspruch 3, worin $R_1$ eine Alkylgruppe mit 1-3 C bedeutet.

5. Metallkomplexe gemäss Anspruch 3, worin $R_1$ den Benzoyl- oder p-Chlorbenzoylrest bedeutet.

6. Metallkomplexe gemäss Anspruch 3, worin $M_1$ Kobalt bedeutet.

7. Verfahren zur Herstellung von Iminoisoindolin-Metallkomplexen gemäss Anspruch 1, dadurch gekennzeichnet, dass man ein Iminoisoindolinon der Formel

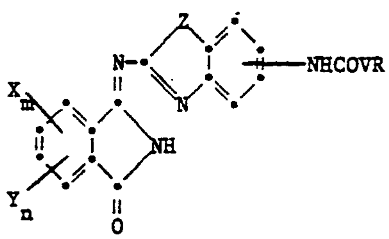

worin R, V, X, Y, Z, m und n die in Anspruch 1 angegebene Bedeutung haben, mit Mitteln behandelt, die ein zweiwertiges Nicht-Erdalkalimetall abgeben.

8. Verfahren gemäss Anspruch 6, dadurch gekennzeichnet, dass man als metallabgebende Mittel nickel-, kupfer- oder insbesondere kobaltabgebende Mittel verwendet.

9. Verfahren nach Anspruch 6, dadurch gekennzeichnet, dass man von einem Iminoisoindolinon der angegebenen Formel ausgeht, worin Z die NH-Gruppe, m = 4 oder n = 0 bedeutet.

10. Verfahren zum Pigmentieren von hochmolekularem organischem Material, gekennzeichnet durch die Verwendung der Metallkomplexe gemäss Anspruch 1.

11. Hochmolekulares organisches Material enthaltend einen Metallkomplex gemäss Anspruch 1.

## Claims

1. An iminoisoindolinone metal complex of the Formula

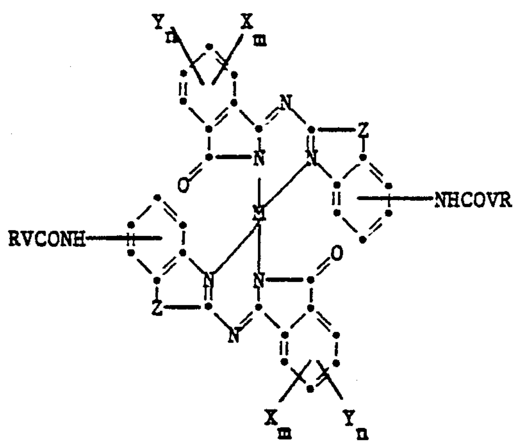

(II)

wherein R is a hydrogen atom, an alkyl group, an aryl radical or a heterocyclic radical, V is a direct bond or a -NH group, X is a hydrogen atom, Y is a halogen atom, Z is an oxygen or a sulfur atom or a -NH group, M is a divalent metal which may not be an alkaline earth metal, m and n are 0 to 4, and the sum of m and n must be 4.

2. A metal complex according to claim 1, wherein M is nickel, cooper or cobalt.

3. A metal complex according to claim 1 of the formula

(Siehe das Schema, Seite 13)

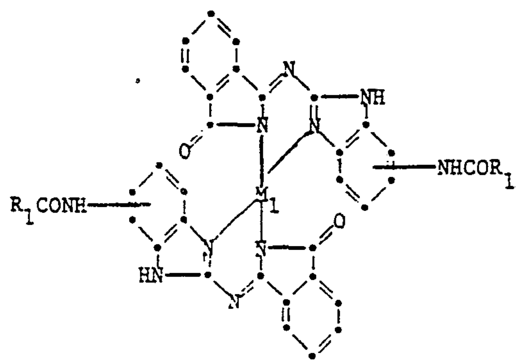

wherein $R_1$ is a $C_1$-$C_4$alkyl group, a phenyl group which is unsubstituted or substituted by halogen atoms, methyl groups, $C_1$-$C_4$alkoxy groups or by a further phenyl group, or is a naphthyl radical, and $M_1$ is nickel, cobalt or copper.

4. A metal complex according to claim 3, wherein $R_1$ is an alkyl group of 1 to 3 carbon atoms.

5. A metal complex according to claim 3, wherein $R_1$ is the benzoyl or p-chlorobenzoyl radical.

6. A metal complex according to claim 3, wherein $M_1$ is cobalt.

7. A process for the preparation of an iminoisoindoline metal complex according to claim 1, which process treating an iminoisoindolinone of the formula

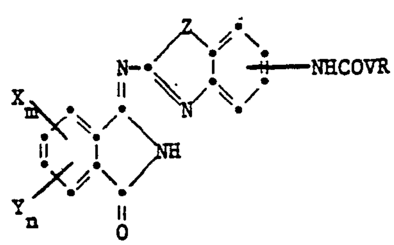

wherein R, V, X, Y, Z, m and n are as defined in claim 1, with an agent which donates a divalent metal which may not be an alkaline earth metal.

8. A process according to claim 7, wherein a nickel, copper or, in particular, cobalt donor is used as metal donor.

9. A process according to claim 7, wherein the starting compound is an iminoisoindolinone of the indicated formula, in which Z is the -NH group, m is 4 or n is 0.

10. A method of pigmenting organic material of high molecular weight, which comprises the use of a metal complex according to claim 1.

11. Organic material of high molecular weight containing a metal complex according to claim 1.

**Revendications**

1. Complexes métalliques dérivant de l'iminoiso-indolinone, complexes qui répondent à la formule

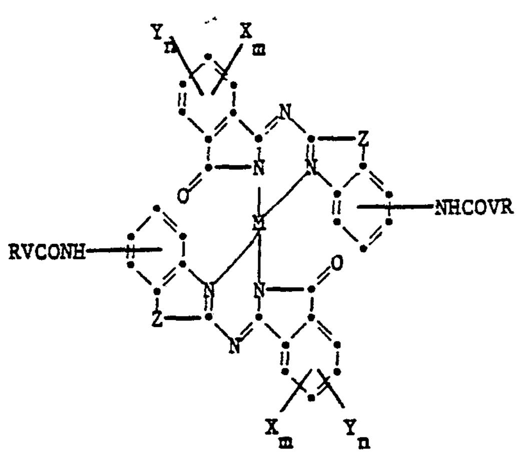

(II)

dans laquelle R représente un atome d'hydrogène, un radical alkyle, un radical aryle ou un radical hétérocyclique, V représente une liaison directe ou un groupe -NH-, X représente un atome d'hydrogène, Y représente un atome d'halogène, Z représente un atome O ou S ou un groupe -NH-, M représente un métal divalent non alcalino-terreux, m et n représentent chacun un nombre de 0 à 4, la somme (m + n) devant être égale à 4.

2. Complexes métalliques selon la revendication 1 dans lesquels M est le nickel, le cuivre ou le cobalt.

3. Complexes métalliques selon la revendication 1 qui répondent à la formule

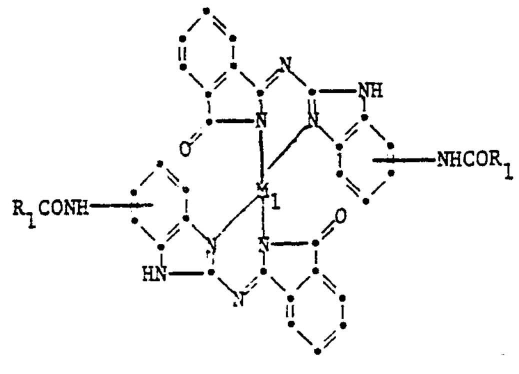

dans laquelle $R_1$ représente un radical alkyle contenant de 1 à 4 atomes de carbone, un radical phényle éventuellement porteur d'atomes d'halogènes, de radicaux méthyles, de radicaux alcoxy en $C_1$-$C_4$ ou d'un radical phényle supplémentaire, ou représente un radical naphtyle, et $M_1$ représente le nickel, le cobalt ou le cuivre.

4. Complexes métalliques selon la revendication 3 dans lesquels $R_1$ représente un radical alkyle contenant de 1 à 3 atomes de carbone.

5. Complexes métalliques selon la revendication 3 dans lesquels $R_1$ représente le radical benzoyle ou p-chlorobenzoyle.

6. Complexes métalliques selon la revendication 3 dans lesquels $M_1$ représente le cobalt.

7. Procédé de préparation de complexes métalliques dérivant de l'imino-iso-indoline selon la revendication 1, procédé caractérisé en ce qu'on traite une imino-iso-indolinone répondant à la formule

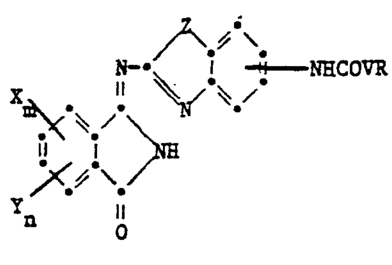

dans laquelle R, V, X, Y, Z, m et n ont les significations données à la revendication 1, par des agents cédant un métal bivalent non alcalino-terreux.

8. Procédé selon la revendication 6 caractérisé en ce qu'on utilise, comme agents cédant un métal, des agents cédant du nickel, du cuivre ou, plus spécialement, du cobalt.

9. Procédé selon la revendication 6 caractérisé en ce qu'on part d'une imino-iso-indolinone répondant à la formule indiquée dans laquelle Z représente le groupe -NH-, m est égal à 4 et n à 0.

10. Procédé pour pigmenter des matières organiques macromoléculaires, caractérisé en ce qu'on utilise des complexes métalliques selon la revendication 1.

11. Matières organiques macromoléculaires contenant un complexe métallique selon la revendication 1.